# EUROPÄISCHE PATENTSCHRIFT

(11) **EP 1 627 774 B1**
(45) Veröffentlichungstag und Bekanntmachung des Hinweises auf die Patenterteilung: **12.09.2007**
(21) Anmeldenummer: 04017762.8
(22) Anmeldetag: 27.07.2004
(51) Int. Cl.: B60R 11/02

(54) **Baumaschine mit Bedienkonsole**
Construction machine with control desk
Engin de chantier avec pupitre de commande

(43) Veröffentlichungstag der Anmeldung: 22.02.2006
(73) Patentinhaber: Joseph Voegele AG, 68146 Mannheim (DE)
(72) Erfinder: Buschmann, Martin Dipl.-Ing., 67435 Neustadt (DE)
(74) Vertreter: Grünecker, Kinkeldey, Stockmair & Schwanhäusser Anwaltssozietät

(56) Entgegenhaltungen:
- DE-A- 4 141 592
- DE-U- 20 021 453
- US-A- 5 567 004

## Beschreibung

Die Erfindung betrifft eine Baumaschine der im Oberbegriff des Patentanspruchs 1 angegebenen Art und eine Bedienkonsole gemäß Anspruch 14.

Es ist bekannt, siehe insbesondere Dokument DE-A-4141592, die Befehlmeldegeräte wie Schalter oder dgl. der Bedienkonsole einer Baumaschine, insbesondere einem Straßenfertiger oder einem Beschicker, entweder in Einzeladerverdrahtung oder als monolithische Tastatur, z.B. Folientastatur, auszuführen. Die Einzeladerverdrahtung hat den Vorteil, dass sie den Austausch einzelner Befehlmeldegeräte im Falle eines Schadens ermöglicht, bedeutet jedoch bauartbedingt einen hohen und kostenintensiven Montage- und Zeitaufwand für die Herstellung. Monolithische Folientastaturen oder andere printplattenfähige Monolith-Konzepte sind hingegen in der Herstellung deutlich kostengünstiger. Bei einem Schaden an einem Befehlmeldegerät ist jedoch ein Totalaustausch erforderlich, was letztendlich solche Servicefälle teuer macht.

Der Erfindung liegt die Aufgabe zugrunde, eine Baumaschine mit einer kostengünstig erstellbaren Bedienkonsole anzugeben, die auch kostengünstige Servicefälle ermöglicht. Teil der Aufgabe ist es, bei einem Ausfall zumindest bestimmter Befehlmeldegeräte dennoch die volle Funktionsfähigkeit gewährleisten und damit die Verfügbarkeit der Baumaschine zu erhöhen.

Die gestellte Aufgabe wird mit den Merkmalen des Anspruchs 1 gelöst.

Im Hinblick auf günstige Herstellungskosten werden bei der Baumaschine in der Bedienkonsole printplattenkompatible Befehlmeldegeräte verwendet. Diese werden, um Servicefälle kostengünstig zu machen, jedoch nicht monolithisch in die Bedienkonsole eingegliedert, sondern auf kleinere logische Serviceeinheiten verteilt. Diese Serviceeinheiten sind so ausgebildet, dass sie einzeln austauschbar sind. Aufgrund ihrer geringeren Komplexität sind diese Serviceeinheiten dann in einem Servicefall kostengünstig auszutauschen. Ferner ermöglicht dieses Konzept eine zumindest einfache Redundanz zwischen den Serviceeinheiten. Dadurch wird die Verfügbarkeit der Baumaschine erhöht, weil bei Ausfall eines Befehlmeldegeräts oder sogar bei Ausfall ei-ner Serviceeinheit die ausgefallene Funktion über wenigstens ein anderes Befehlmeldegerät oder eine andere Serviceeinheit bereitstellbar ist.

Zweckmäßig weist jede Serviceeinheit mehrere Befehlmeldegeräte auf, deren Anzahl und Zusammenstellung im Hinblick auf ergonomischen Bedienkomfort und/oder eine erfahrungsgemäße Ausfallhäufigkeit gewählt sein kann.

Bei einer bevorzugten Ausführungsform sind die Befehlmeldegeräte einer Serviceeinheit so zusammengestellt, dass sie eine ergonomisch und funktionell logische Gruppierung bilden. Dies kann beispielsweise bedeuten, dass Befehlmeldegeräte für Funktionen zu bestimmten Arbeitsabläufen zusammengefasst werden.

Bei einer anderen, bevorzugten Ausführungsform umfassen mindestens zwei solcher Bedienkonsolen einen Hauptsteuerstand und wenigstens einen Außensteuerstand derselben Baumaschine, wobei der jeweilige Außensteuerstand zumindest ein Befehlmeldegerät in wenigstens einer Serviceeinheit aufweist, das einem Befehlmeidegerät einer Serviceeinheit des Hauptsteuerstandes funktionell gleichwertig ist.

Herstellungs- und montagetechnisch günstig sind die Befehlmeldegeräte einer Serviceeinheit mit wenigstens einer in die Serviceeinheit eingegliederten Printplatte verbunden.

Damit im Servicfall eine Serviceeinheit auch von Laien ausgetauscht werden kann, ist es zweckmäßig, die Serviceeinheit mit verpolungssicheren Steckern zu versehen. Ferner ist es zweckmäßig, im Hinblick auf einen einfachen Austausch, jede Serviceeinheit mit dem Bedienpult-Gehäuse lösbar zu verbinden, vorzugsweise zu verschrauben.

Im Hinblick auf eine erhöhte Verfügbarkeit der Baumaschine ist es bei einer zweckmäßigen Ausführungsform wesentlich, dass zumindest ein Großteil, vorzugsweise alle, der in einer Serviceeinheit durch die vorgesehene Befehlmeldegeräte gegebenen Funktionen mindestens ein zweites Mal innerhalb der Gesamtheit aller anderen Serviceeinheiten bereitgestellt ist bzw. sind. Diese zumindest einfache Redundanz unter den Serviceeinheiten stellt sicher, dass der Ausfall eines Befehlmeldegeräts oder sogar der Ausfall einer Serviceeinheit die Verfügbarkeit der Baumaschine nicht beeinträchtigt. Die ausgefallene Funktion oder sogar die Funktionen der ganzen Serviceeinheit bleibt bzw. bleiben bei Bedarf durch andere Befehlmeldegeräte oder Serviceeinheiten bereitgestellt. Beispielsweise sind die gegebenen Funktionen mindestens ein zweites Mal im selben und/oder in einem weiteren Bedienpult-Gehäuse vorgesehen, oder sind diese gegebenen Funktionen mindestens ein zweites Mal softwareseitig vorgesehen und bei Bedarf über andere Befehlmeldegeräte oder Serviceeinheiten aktivierbar. Ferner ist es möglich, die gegebenen Funktionen mindestens ein zweites Mal über ein ebenfalls in einer Serviceeinheit eingegliedertes Display abrufbar und verfügbar bereitzustellen. Hierbei wird unter Nutzen des Displays das ausgefallene Befehlmeldegerät oder die ausgefallene Serviceeinheit umgangen, so dass es bzw. sie komfortabel erst zu einem geeigneten Zeitpunkt ausgetauscht werden kann, z.B. nach Arbeitsschluss.

Obwohl das Bedienpult-Gehäuse die einzelnen Serviceeinheiten im Betrieb schützt und abschirmt, kann es zweckmäßig sein, jede Serviceeinheit in ein Kapselgehäuse einzugliedern. Dies kann auch zum Verhindern unerwünschter Manipulationen bei Reparaturversuchen zweckmäßig sein.

Um den Austausch von Serviceeinheiten auch durch Laien einfach und sicher vorzubestimmen, ist es zweckmäßig, wenn die verschiedenen Serviceeinheiten zumindest für dasselbe Bedienpult-Gehäuse unterschiedliche Umrisskonfiguration haben, so dass jede Serviceeinheit nur in eine entsprechend geformte Öffnung des Bedienpult-Gehäuses passt.

Anhand der Zeichnung werden Ausführungsformen des Erfindungsgegenstandes erläutert. Es zeigen:
- Fig. 1: eine perspektivische Draufsicht einer Bedienkonsole mit mehreren Serviceeinheiten,
- Fig. 2: eine perspektivische Ansicht einer anderen Ausführungsform einer Bedienkonsole mit mehreren Serviceeinheiten,
- Fig. 3 - 5: verschiedene Serviceeinheiten der Bedienkonsole von Fig. 1,
- Fig. 6: eine perspektivische Darstellung einer Serviceeinheit der Bedienkonsole von Fig. 2,
- Fig. 7: eine perspektivische Ansicht einer weiteren Ausführungsform einer Bedienkonsole mit mehreren Serviceeinheiten, und
- Fig. 8: eine Serviceeinheit der Bedienkonsole von Fig. 7.

Eine Baumaschine wie ein Straßenfertiger oder Beschicker (nicht gezeigt) ist, wie dies in dieser Technik üblich ist, mit einer Steuervorrichtung für die einzelnen Funktionskomponenten ausgestattet, um die Funktionskomponenten bei Arbeitsfahrt oder Transportfahrt entsprechend zu aktivieren, zu steuern, zu regeln und/oder zu überwachen. Dazu ist in der Baumaschine an geeigneter Stelle mindestens eine Bedienkonsole K vorgesehen, die mehrere vorzugsweise elektronische Befehlmeldegeräte und gegebenenfalls Überwachungs- oder Aufzeichnungsgeräte enthält und mit der Steuervorrichtung verbunden ist. Üblich ist ein Hauptsteuerstand mit einer Bedienkonsole am Führerstand der Baumaschine und wenigstens ein Außensteuerstand, der gegebenenfalls mit dem Hauptsteuerstand und/oder der Steuervorrichtung verbunden und an einer geeigneten Stelle positioniert ist, z.B. bei der Einbaubohle oder bei der Fördervorrichtung. In manchen Fällen ist die Bedienkonsole des Außensteuerstandes sogar abnehmbar und tragbar vorgesehen. Vom Hauptsteuerstand aus lassen sich zumeist alle Funktionskomponenten der Baumaschine bedienen und/oder überwachen, während der wenigstens eine Außensteuerstand die Bedienung und/oder Überwachung zumeist nur ausgewählter Funktionskomponenten ermöglicht. Aus diesen Gründen ist in der Bedienkonsole des Hauptsteuerstandes zumindest eine große Gruppe an elektronischen Befehlmeldegeräten vorgesehen, während an dem zumindest einen Außensteuerstand eine kleinere Gruppe Befehlmeldegeräte vorgesehen wird, zumeist ausgewählte Befehlmeldegeräte, die für dieselben Funktionen auch in der Bedienkonsole des Hauptsteuerstandes vorhanden sein können.

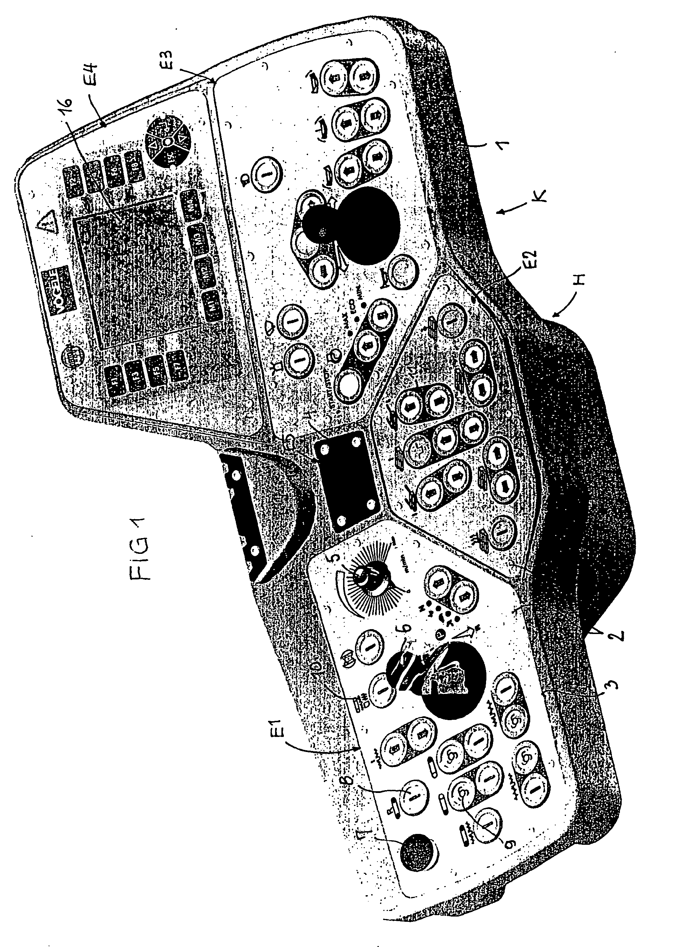

Die in Fig. 1 gezeigte Bedienkonsole K für den Hauptsteuerstand H weist ein schalenförmiges Bedienpult-Gehäuse 1 mit einer Oberseite auf, in der mehrere Ausschnitte 3 mit untereinander verschiedenen Umrissen vorgesehen sind. In den Ausschnitten 3 sind Serviceeinheiten E1, E2, E3 und E4 mit entsprechenden unterschiedlichen Umrisskonfigurationen passend eingesetzt und beispielsweise mit Befestigungsschrauben 2 festgelegt. Ferner kann ein Ausschnitt 4 als Leerausschnitt für eine weitere Serviceeinheit E5 vorgesehen und durch eine Blende verschlossen sein.

Jede Serviceeinheit E1 - E4 ist mit einer Gruppe elektronischer Befehlmeldegeräte logisch und ergonomisch gegliedert, die bestimmte Funktionen bei der Steuerung und/oder Überwachung von Arbeitskomponenten der Baumaschine repräsentieren. In der Serviceeinheit E1 ist beispielsweise das Befehlmeldegerät 5 ein Drehschalter, 6 ein Joy-Stick, 7 ein Not-Aus-Knopf, 8 ein Drehschalter und 9 eine Betriebsanzeige mit einem Druckknopf. Den Befehlmeldegeräten sind Symboldarstellungen 10 zugeordnet, die auf die jeweilige Arbeits-Funktion der Baumaschine hinweisen. In der Serviceeinheit E2 ist eine anderen Gruppierung an Befehlmeldegeräten vorgesehen, beispielsweise ein doppelter Druckschalter 11 für eine Hebebewegung des Anlenkpunktes eines rechten Einbaubohlenholms. Wieder anders gruppierte Befehlmeldegeräte sind in der Serviceeinheit E3 zusammenfasst. Schließlich sind in der Serviceeinheit E4 ein Display 16 mit Tasten und einer Richtungstastatur zusammengefasst.

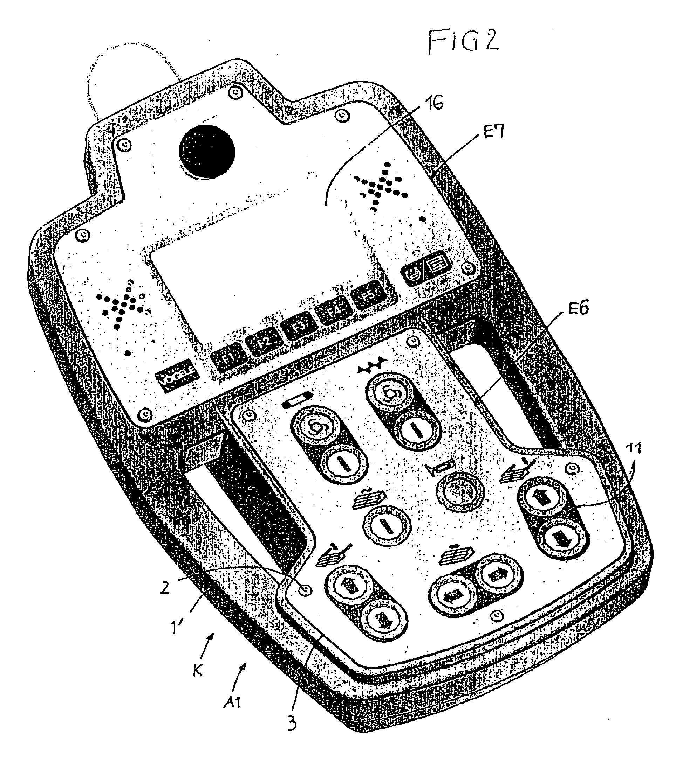

Die in Fig. 2 gezeigte Bedienkonsole K ist ein sogenannter Außensteuerstand A1, wie er an einer Außenseite der Baumaschine an geeigneter Stelle fest oder abnehmbar vorgesehen sein kann. In dem Bedienpult-Gehäuse 1' ist in einem Ausschnitt eine Serviceeinheit E6 enthalten, die mehrere Befehlmeldegeräte enthält, unter anderem auch das Befehlmeldegerät 11, das sich auch in der Serviceeinheit E2 in Fig. 1 befindet. Die Serviceeinheit E7 in Fig. 2 enthält ein Display 16 mit Tastatur und einen Not-Aus-Knopf. Die Serviceeinheiten E6, E7 sind mit den Schrauben 2 herausnehmbar im Bedienpult-Gehäuse 1' festgelegt.

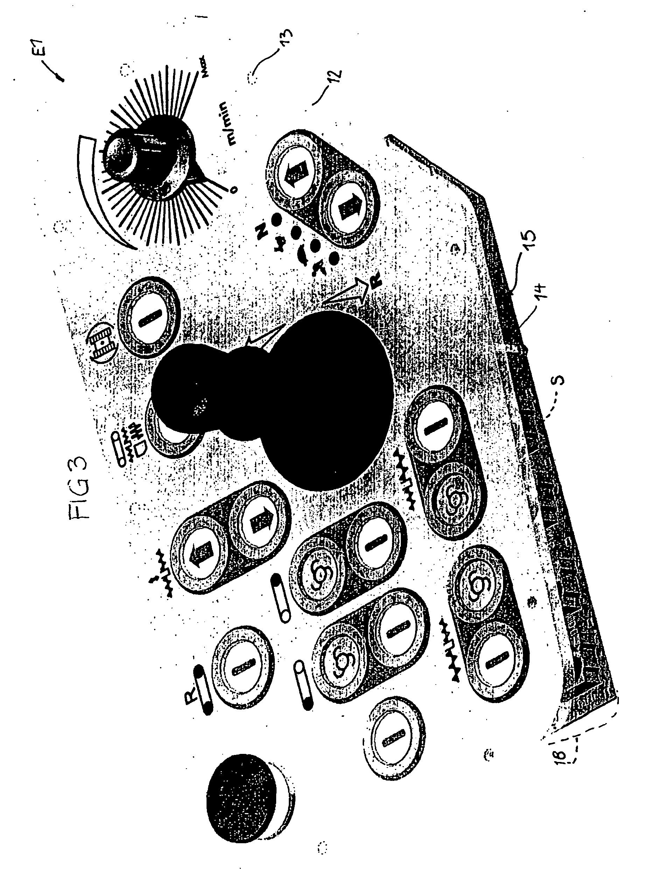

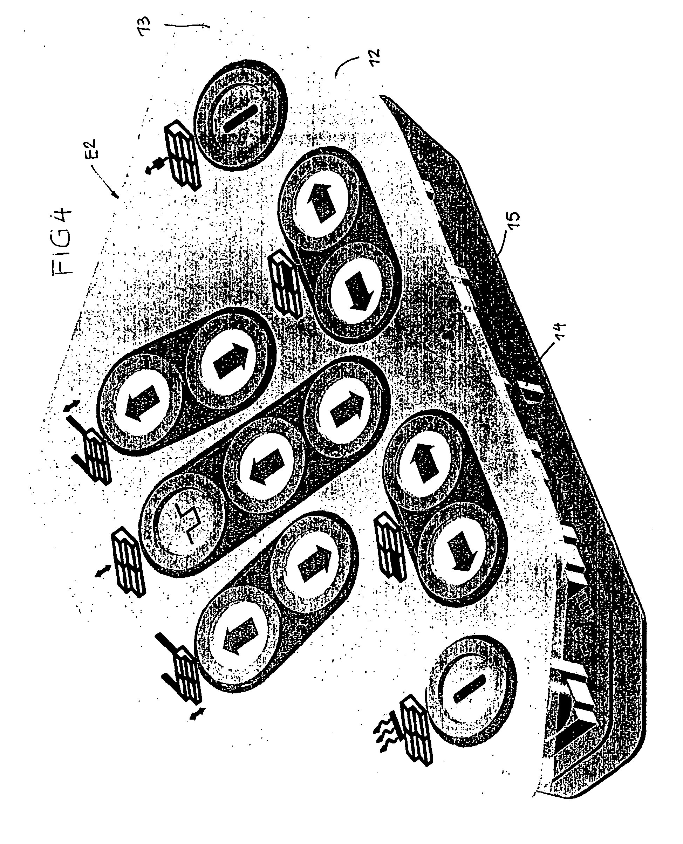

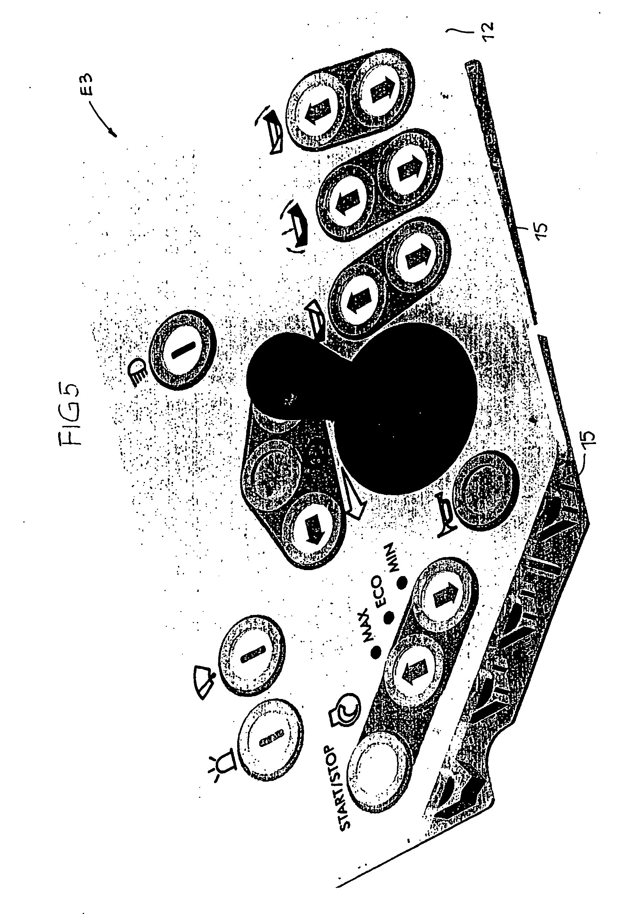

Die Fig. 3, 4 und 5 zeigen die Serviceeinheiten E1, E2 und E3 der Bedienkonsole K von Fig. 1. Die Befehlmeldegeräte sind jeweils in einer Frontplatte 12 angeordnet, die die Umrisskonfiguration der Serviceeinheit bestimmt und die Bohrungen 13 für die Befestigungsschrauben 2 aufweist. Über Distanzelemente 14 ist mindesten eine Printplatte 15 funktionell mit den elektronischen Befehlmeldegeräten und der Frontplatte 12 verbunden. Gegebenenfalls ist die ganze Serviceeinheit, z.B. E1 in Fig. 3, in einem Kapselgehäuse 18 geschützt untergebracht, aus dem unterseitig nur verpolungssichere Stecker S zum Anschluss an Gegenstecker im Bedienpult-Gehäuse 1, 1' vorgesehen sind. Die gleiche Bauweise ist bei der Serviceeinheit E2 und auch bei der Serviceeinheit E3 (Fig. 4 und 5) gegeben. In Fig. 5 sind zwei Printplatten 15 vorgesehen.

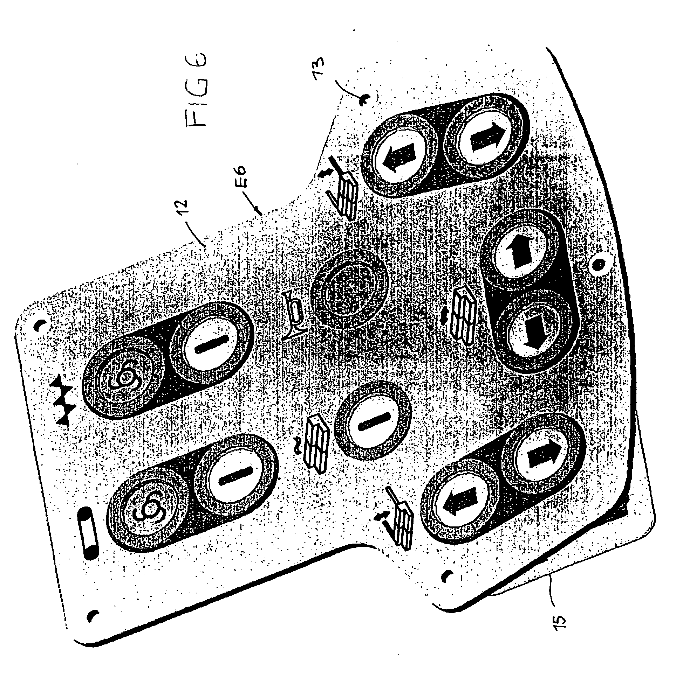

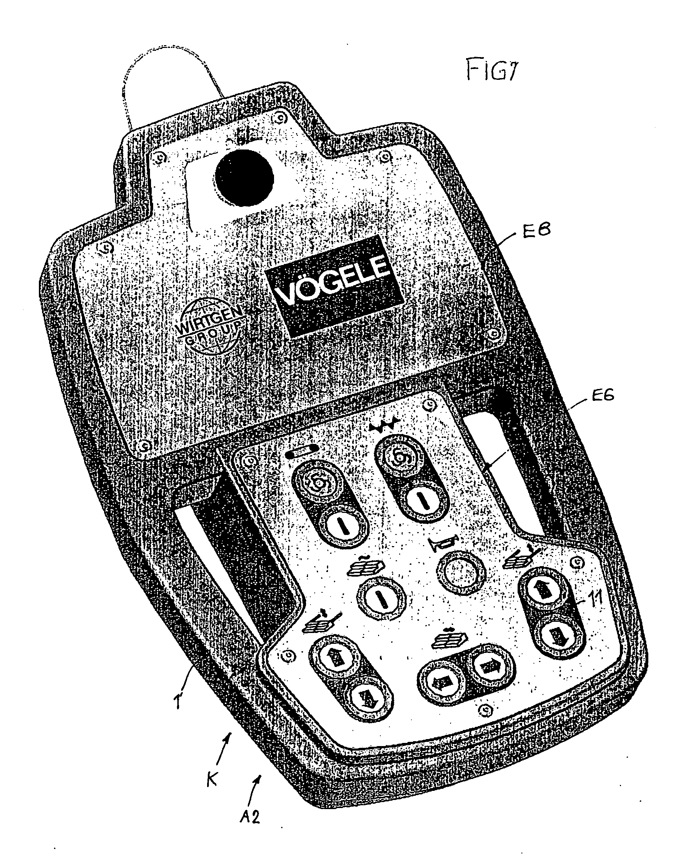

Die Serviceeinheit E6 in Fig. 6 dient zum Einbau in die Bedienkonsole K von Fig. 2 (und auch in die Bedienkonsole K von Fig. 7), und ist mit ihrer Frontplatte 12 entsprechend dem Umriss eines bestimmten Ausschnitts 3 in dem Bedienpult-Gehäuse 1' gestaltet.

Die in Fig. 7 gezeigte Bedienkonsole K ist ebenfalls ein Außensteuerstand A2, wobei jedoch die anstelle der in Fig. 2 eingebauten Serviceeinheit E7 eingebaute Serviceeinheit E8 nur einen Not-Aus-Schalter als Befehlmeldeglied aufweist. Die Serviceeinheit E6 kann, muss jedoch nicht, der Serviceeinheit E6 von Fig. 2 entsprechen.

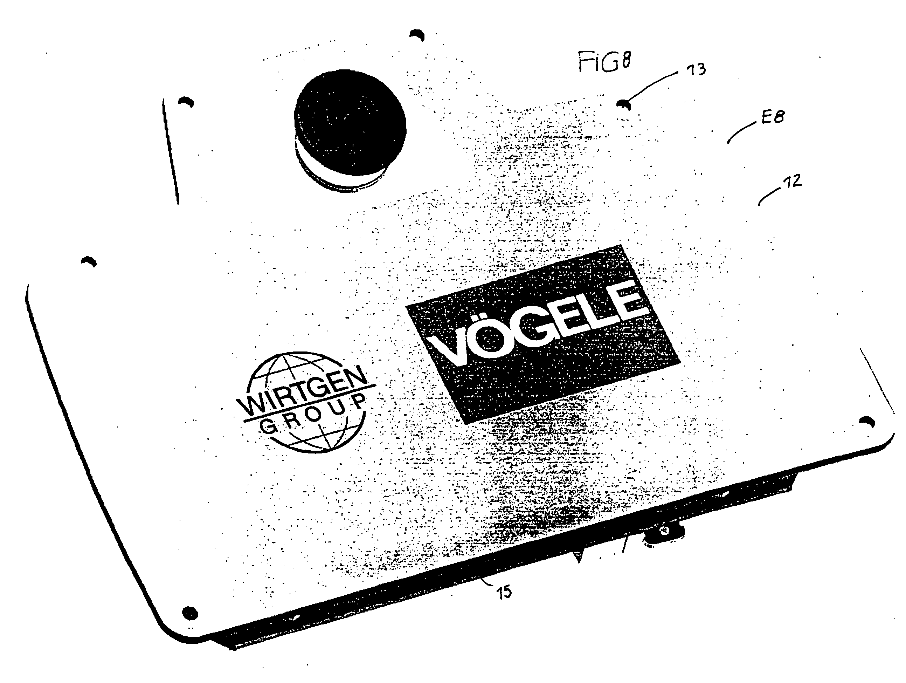

Fig. 8 verdeutlicht schließlich den Aufbau der Serviceeinheit E8 der Bedienkonsole K von Fig. 7 mit der Frontplatte 12 und den Schraubenlöchern 13 und der Printplatte 15.

Zweckmäßig werden nur mit Printplatten kompatible elektronische Befehlmeldegeräte verwendet, um günstige Herstellungskosten zu erreichen. Die Serviceeinheiten sind kleine logische Einheiten, wobei logisch bedeuten soll, dass Befehlmeldegeräte für ähnliche oder für bestimmte Arbeitsvorgänge gemeinsam gebrauchte Funktionen zusammengefasst und ergonomisch angeordnet sind. Jede Serviceeinheit ist einzeln austauschbar. Aufgrund ihrer geringeren Komplexität, im Vergleich zu einem monolithischen Aufbau, sind die Serviceeinheiten kostengünstig und gestalten sich Servicefälle, d.h. ein erforderlicher Austausch, kostengünstig. Der Austausch kann selbst von Laien vorgenommen werden, da die Serviceeinheiten mit verpolungssicheren Steckern versehen, mit dem Bedienpult-Gehäuse nur verschraubt, und die Umrisskonfigurationen so gewählt sind, dass keine Irrtümer möglich sind.

Innerhalb des gesamten Konzeptes ist eine mindestens einfache Redundanz zwischen den Serviceeinheiten vorgesehen. Dies bedeutet, dass der Ausfall eines Befehlmeldegerätes einer Serviceeinheit oder auch der Ausfall der Serviceeinheit die Verfügbarkeit der Baumaschine nicht beeinträchtigt, in dem alle Funktionen, die durch die Befehlmeldegeräte einer Serviceeinheit repräsentiert werden, in der Gesamtheit aller anderen Serviceeinheiten mindestens ein weiteres Mal vorhanden sind. So kann beispielsweise bei Ausfall eines Befehlmeldegeräts im Hauptsteuerstand dieselbe Funktion von einem Außensteuerstand bedient werden, oder sind alle Funktionen softwareseitig zumindest ein zweites Mal vorhanden und bei Bedarf abrufbar und von einer anderen Serviceeinheit aus bedienbar. Dazu können auch die Displays benutzt werden, in denen eine ausgefallene Funktion aufgerufen und dann beispielsweise mit der Tastatur bedient wird. Der Austausch einer Serviceeinheit, die insgesamt oder teilweise ausgefallen ist, kann demzufolge auf einen geeigneten Zeitpunkt verschoben werden, ohne bis dahin die Verfügbarkeit der Baumaschine zu beeinträchtigen.

## Patentansprüche

1. Baumaschine, insbesondere Beschicker oder Straßenfertiger, mit einer Steuervorrichtung und mindestens einer an die Steuervorrichtung angeschlossenen Bedienkonsole (K), in der in einem Bedienpult-Gehäuse (1, 1') zumindest eine Gruppe unterschiedlicher Befehlmeldegeräte (5 bis 11) vorgesehen ist, **dadurch gekennzeichnet, dass** die Befehlmeldegeräte (5 bis 11) der Gruppe auf mehrere separate austauschbar im Bedienpult-Gehäuse (1, 1') angeordnete, logische Serviceeinheiten (E1 bis E8) aufgeteilt sind, deren jede mindestens ein printplattenkompatibles Befehlmeldegerät enthält.

2. Baumaschine nach Anspruch 1, **dadurch gekennzeichnet, dass** jede Serviceeinheit (E1 bis E8) mehrere Befehlmeldegeräte umfasst.

3. Baumaschine nach Anspruch 2, **dadurch gekennzeichnet, dass** die Befehlmeldegeräte in einer Serviceeinheit (E1 bis E8) eine ergonomisch und funktionell logische Gruppierung bilden.

4. Baumaschine nach Anspruch 1, **dadurch gekennzeichnet, dass** mindestens zwei Bedienkonsolen (K) derselben Baumaschine einen Hauptsteuerstand (H) und wenigstens einen Außensteuerstand (A1, A2 ) umfassen, und dass der jeweilige Außensteuerstand (A1, A2) in wenigstens einer Serviceeinheit zumindest ein einem Befehlmeldeglied in den Serviceeinheiten des Hauptsteuerstandes (H) funktionell gleichartiges Befehlmeldeglied aufweist.

5. Baumaschine nach Anspruch 1, **dadurch gekennzeichnet, dass** die Befehlmeldegeräte einer Serviceeinheit (E1 bis E8) mit wenigstens einer in die Serviceeinheit eingegliederten Printplatte (15) verbunden sind.

6. Baumaschine nach Anspruch 1, **dadurch gekennzeichnet, dass** jede Serviceeinheit (E1 bis E8) wenigstens einen verpolungssicheren Stecker (S) aufweist, für den im Bedienpult-Gehäuse (1, 1') ein Gegenstecker positioniert ist.

7. Baumaschine nach Anspruch 1, **dadurch gekennzeichnet, dass** jede Serviceeinheit (E1 bis E8) mit dem Bedienpult-Gehäuse (1, 1') lösbar verbunden, vorzugsweise verschraubt, ist.

8. Baumaschine nach wenigstens einem der vorhergehenden Ansprüche, **dadurch gekennzeichnet, dass** zumindest ein Großteil, vorzugsweise alle, der in einer Serviceeinheit (E1 bis E8) durch die vorgesehenen Befehlmeldegeräte gegebenen Funktionen mindestens ein zweites Mal innerhalb der Gesamtheit aller anderen Serviceeinheiten vorgesehen ist.

9. Baumaschine nach Anspruch 8, **dadurch gekennzeichnet, dass** die gegebenen Funktionen mindestens ein zweites Mal in derselben und/oder in einer weiteren Bedienkonsole (K) vorgesehen sind.

10. Baumaschine nach Anspruch 8, **dadurch gekennzeichnet, dass** die gegebenen Funktionen mindestens ein zweites Mal softwareseitig vorgesehen sind.

11. Baumaschine nach Anspruch 8, **dadurch gekennzeichnet, dass** die gegebenen Funktionen mindestens ein zweites Mal über ein ebenfalls in eine Serviceeinheit (E4, E8) eingegliedertes Display (16) abrufbar und verfügbar sind.

12. Baumaschine nach Anspruch 1, **dadurch gekennzeichnet, dass** jede Serviceeinheit (E1 bis E8) ein Kapselgehäuse (18) aufweist.

13. Baumaschine nach wenigstens einem der vorhergehenden Ansprüche, **dadurch gekennzeichnet, dass** die Serviceeinheiten (E1 bis E8) unterschiedliche Umrisskonfigurationen aufweisen, und dass im Bedienpult-Gehäuse (1, 1') Ausschnitte (3) vorgesehen sind, in die jeweils nur eine bestimmte Serviceeinheit passt.

14. Bedienkonsole für eine Baumaschine, insbesondere einem Straßenfertiger oder Beschicker, **dadurch gekennzeichnet, dass** die Bedienkonsole (K) gemäß wenigstens einem der Ansprüche 1 bis 13 ausgestaltet ist.

## Claims

1. Construction machine, particularly feeder or road paver, comprising a control device and at least one control panel (K) connected to the control device, the control panel (K) containing at least one group of different command signalling devices (5 to 11) in an operation console housing (1, 1'), **characterised in that** the command signalling devices (5 to 11) of the group are distributed in several separate logic service units (E1 to E8) which are replaceably arranged in the operation console housing (1, 1'), each service unit (E1 to E8) containing at least one command signalling device which is compatible with printed circuit boards.

2. Construction machine as in claim 1, **characterised in that** each service unit (E1 to E8) includes several command signalling devices.

3. Construction machine as in claim 2, **characterised in that** the command signalling devices within a service unit (E1 to E8) form an ergonomic and functional logical grouping.

4. Construction machine as in claim 1, **characterised in that** two control panels (K) of the same construction machine are included in a main operators platform (H) and at least one external operator's control area (A1, A2), and that the respective external operator's control area (A1, A2) comprises in at least one service unit at least one command signalling device which is functionally equivalent to at least one command signalling device in the service units of the main operator's platform (H).

5. Construction machine as in claim 1, **characterised in that** the command signalling devices of one service unit (E1 to E8) are connected with at least one printed circuit board (15) incorporated into the service unit.

6. Construction machine as in claim 1, **characterised in that** each service unit (E1 to E8) comprises at least one connector (S) which is protected against reverse polarity (polarity safe connector), for which connector a counter connector is positioned in the operation console housing (1, 1').

7. Construction machine as in claim 1, **characterised in that** each service unit (E1 to E8) is detachably connected, preferably by a threaded connection, with the operation console housing (1, 1').

8. Construction machine as in at least one of the preceding claims, **characterised in that** at least a major part, preferably all, of the functions present in a service unit (E1 to E8) by the provided command signalling devices is provided at least a second time within the entirety of all other service units.

9. Construction machine as in claim 8, **characterised in that** the present functions are provided at least a second in the same and/or in a further control panel (K).

10. Construction machine as in claim 8, **characterised in that** the present functions are provided at least a second time in software.

11. Construction machine as in claim 8, **characterised in that** the present functions are available by retrieval via a display (16) which is incorporated into a service unit (E4, E8).

12. Construction machine as in claim 1, **characterised in that** each service unit (E 1 to E8) comprises a encapsulating casing (18).

13. Construction machine as in at least one of the preceding claims, **characterised in that** the service units (E1 to E8) have differing contour configurations, and that differing cut-outs (3) are formed in the operation console housing (1, 1') into which only a determined service unit fits.

14. Control panel for a construction machine, particularly for a road paver or a feeder, **characterised in that** control panel (K) is formed according to at least one of claims 1 to 13.

## Revendications

1. Engin de chantier, en particulier appareil-doseur ou finisseur de route, avec un dispositif de commande et au moins une console de commande (K) raccordée au dispositif de commande, console dans laquelle au moins un groupe de différents organes de signalisation de commandes (5 à 11) est prévu dans un boîtier du pupitre de commande (1, 1'), **caractérisé en ce que** les organes de signalisation de commandes (5 à 11) du groupe sont répartis sur plusieurs unités de manipulation (E1 à E8) logiques disposées de manière interchangeable dans le boîtier du pupitre de commande (1, 1') dont chacune contient au moins un organe de signalisation de commande compatible avec une carte à circuits imprimés.

2. Engin de chantier selon la revendication 1, **caractérisé en ce que** chaque unité de manipulation (E1 à E8) comprend plusieurs organes de signalisation de commandes.

3. Engin de chantier selon la revendication 2, **caractérisé en ce que** les organes de signalisation de commandes forment un groupe logique du point de vue ergonomique et fonctionnel, dans une unité de manipulation (E1 à E8).

4. Engin de chantier selon la revendication 1, **caractérisé en ce qu'**au moins deux consoles de commande (K) de cet engin de chantier comprennent un poste de commande principal (H) et au moins un poste de commande extérieur (A1, A2) et **en ce que** chaque poste de commande extérieur (A1, A2) présente dans au moins une unité de manipulation au minimum un organe de signalisation de commandes du même type fonctionnel qu'un organe de signalisation de commandes dans les unités de manipulation du poste de commande principal (H).

5. Engin de chantier selon la revendication 1, **caractérisé en ce que** les organes de signalisation de commandes d'une unité de manipulation (E1 à E8) sont reliés à au moins une carte à circuits imprimés (15) intégrée dans l'unité de manipulation.

6. Engin de chantier selon la revendication 1, **caractérisé en ce que** chaque unité de manipulation (E1 à E8) présente au moins un connecteur irréversible (S) pour lequel un contre-connecteur est positionné dans le boîtier du pupitre de commande (1, 1').

7. Engin de chantier selon la revendication 1, **caractérisé en ce que** chaque unité de manipulation (E1 à E8) est reliée de manière amovible au boîtier du pupitre de commande (1, 1'), de préférence par vissage,.

8. Engin de chantier selon au moins l'une quelconque des revendications précédentes, **caractérisé en ce qu'**au moins une grande partie des fonctions assurées par les organes de signalisation de commandes prévus dans une unité de manipulation (E1 à E8), de préférence toutes ces fonctions, sont prévues au moins une deuxième fois à l'intérieur de la totalité de toutes les autres unités de manipulation.

9. Engin de chantier selon la revendication 8, **caractérisé en ce que** les fonctions assurées sont prévues au moins une deuxième fois dans la même et/ou dans une autre console de commande (K).

10. Engin de chantier selon la revendication 8, **caractérisé en ce que** les fonctions assurées sont prévues au moins une deuxième fois côté logiciel.

11. Engin de chantier selon la revendication 8, **caractérisé en ce que** les fonctions assurées peuvent être affichées et sont disponibles au moins une deuxième fois via un affichage (16) également intégré dans une unité de manipulation (E4, E8).

12. Engin de chantier selon la revendication 1, **caractérisé en ce que** chaque unité de manipulation (E1 à E8) présente un boîtier blindé (18).

13. Engin de chantier selon au moins l'une quelconque des revendications précédentes, **caractérisé en ce que** les unités de manipulation (E1 à E8) présentent différentes configurations de contour et **en ce que** des entailles (3), dans lesquelles une seule unité de manipulation déterminée peut être introduite, sont prévues dans le boîtier du pupitre de commande (1, 1').

14. Console de commande pour un engin de chantier, en particulier pour un finisseur de route ou un appareil doseur, **caractérisée en ce que** la console de commande (K) est configurée selon au moins l'une quelconque des revendications 1 à 13.
